# EUROPÄISCHE PATENTANMELDUNG

(11) **EP 3 970 483 A1**
(43) Veröffentlichungstag der Anmeldung: **23.03.2022**
(21) Anmeldenummer: 21174320.8
(22) Anmeldetag: 18.05.2021
(51) Int. Cl.: A01K 15/02

(54) **HUNDESPIELZEUG**

(30) Priorität: 16.09.2020 DE 202020105318 U
(71) Anmelder: Imeri, Enis, 88316 Isny (DE)
(72) Erfinder: Imeri, Enis, 88316 Isny (DE)
(74) Vertreter: Otten, Roth, Dobler & Partner mbB Patentanwälte

(57) **Zusammenfassung**

Die Erfindung betrifft ein Werf- und/oder auf Zug zurückhaltbares Hundespielzeug zum Training und/oder zur spielerischen Ertüchtigung und/oder zur Beschäftigung eines Hundes. Dieses zeichnet sich dadurch aus, dass das Hundespielzeug in der Form eines bandartigen Materials ausgebildet ist.

## Beschreibung

Die Erfindung betrifft ein Werf- und/oder auf Zug zurückhaltbares Hundespielzeug nach Anspruch 1.

### Stand der Technik:

Hunde haben einen instinktiven Spieltrieb. Insbesondere lieben sie es, Gegenstände zu apportieren und an solchen, von ihren Besitzern oder Begleitpersonen festgehaltenen Gegenständen zu zerren.

Solche Gegenstände können z.B. ein Stock, ein Ball oder auch eine Leine, wie in der US 3,476,086 offenbart, sein.

### Aufgabe und Vorteile der Erfindung:

Die Aufgabe der vorliegenden Erfindung ist es, einen alternativen Spielgegenstand für Hunde mit erweiterter Einsatzmöglichkeit bereitzustellen.

Die Lösung der Aufgabe erfolgt durch ein Hundespielzeug gemäß den Merkmalen des Anspruchs 1. In den abhängigen Ansprüchen sind vorteilhafte und zweckmäßige Weiterbildungen angegeben.

Demgemäß betrifft die Erfindung ein werf- und/oder auf Zug zurückhaltbares Hundespielzeug zum Training und/oder zur spielerischen Ertüchtigung und/oder zur Beschäftigung eines Hundes. Dieses zeichnet sich dadurch aus, dass das Hundespielzeug in der Form eines bandartigen Materials ausgebildet ist.

Das heißt, es ist in seiner Form länglich und flach. Dadurch kann es bei Verwendung vom Hund leicht und sicher erfasst werden. Andererseits kann es auch einfach zusammengelegt, leicht verstaut und mitgenommen werden, so dass es auf Bedarf stets zur Verfügung gehalten werden kann.

Das bandartige Material ist bevorzugt ein Textilband. Dies ermöglicht ein gefahrloses zubeißen, ohne das Risiko einer Verletzung, sowohl für den Hund als auch für seine Begleit-und/oder Trainingsperson.

Dadurch, dass das bandartige Material mehrfach vernäht ist, weist es eine hohe Stabilität auf.

Durch eine mehrschichtige Ausbildung und mehrfache Vernähung des bandartigen Materials in der Fläche, können sich die einzelnen Schichten des bandartigen Materials nicht gegeneinander abheben. Dies erhöht seine Stabilität weiter.

Im Weiteren ist das bandartige Material vorzugsweise auch so beschaffen, dass entlang seines Längsverlaufs durch gegenseitiges Umschlagen seiner beiden Enden unter Bildung mindestens einer Schlaufe mindestens ein Knoten knotbar ist.

Des Weiteren kann das bandartige Material so ausgebildet sein, dass es mindestens einmal entlang seines Längsverlaufs umschlagbar ist, so dass es einen zweilagigen Abschnitt aufweist, wobei mit dessen beiden Enden -die des zweilagigen Abschnittsentlang dieses zweilagigen Längsverlaufs durch gegenseitiges Umschlagen unter Bildung mindestens einer Schlaufe mindestens ein Knoten knotbar ist.

Weiter bevorzugt ist das bandartige Material einroll- und zu einem Wurfknoten knotbar ausgebildet. Hierdurch können je nach gewünschtem Verwendungszweck, wie z. B. Apportieren oder Zerren, unterschiedliche Formen eines Hundespielzeugs gebildet werden.

Dadurch, dass das bandartige Materials flechtbar ausgebildet ist, kann der Anwendungsbereich noch zusätzlich erweitert werden.

### Beschreibung eines Ausführungsbeispiels:

Nachfolgend wird die Erfindung unter Bezugnahme auf die beigefügten Figuren noch näher beschrieben.

Es zeigen, beispielhaft und schematisch:

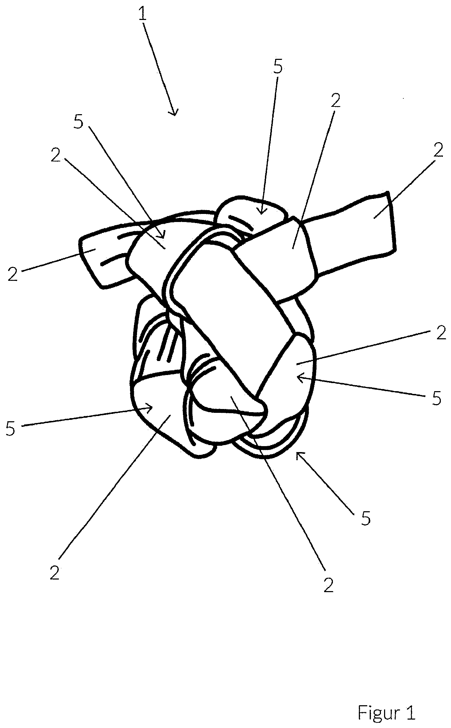

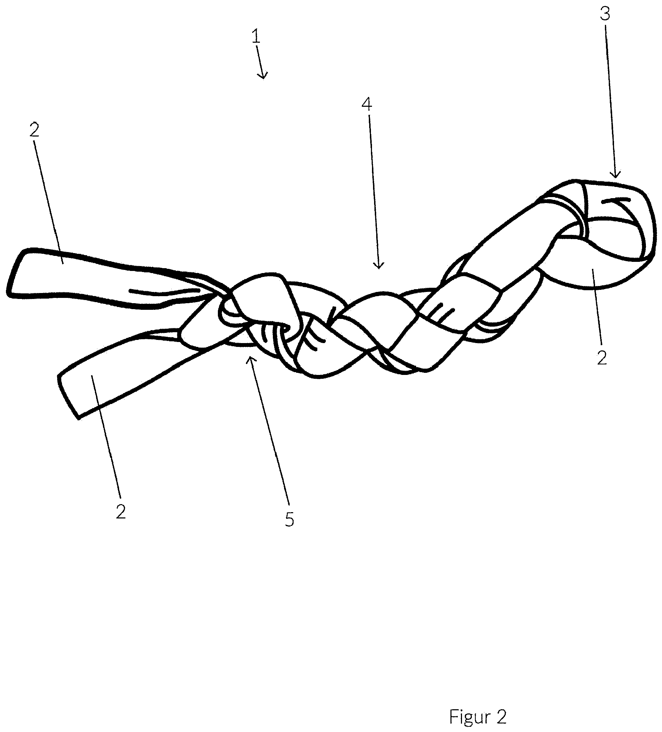

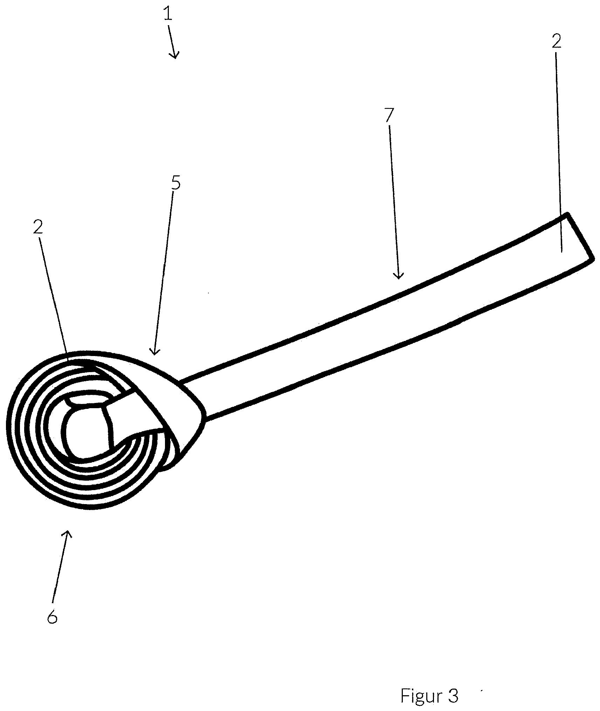

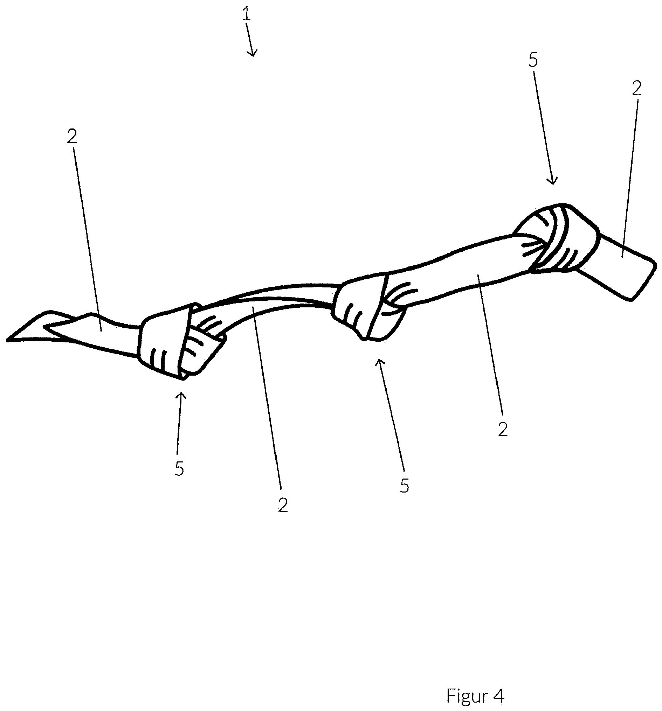

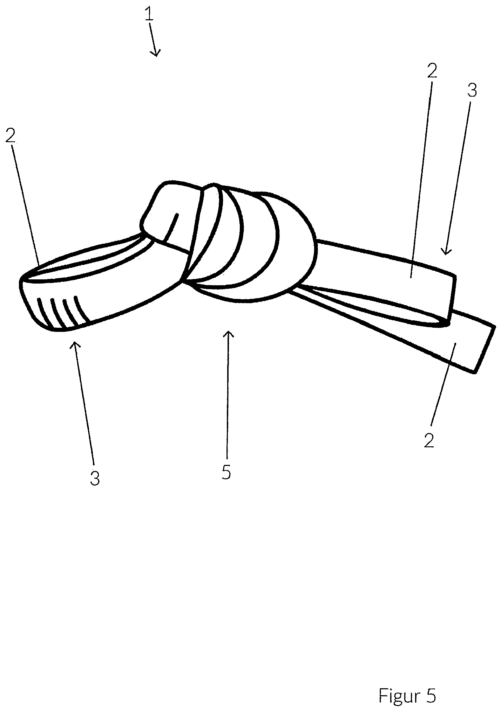

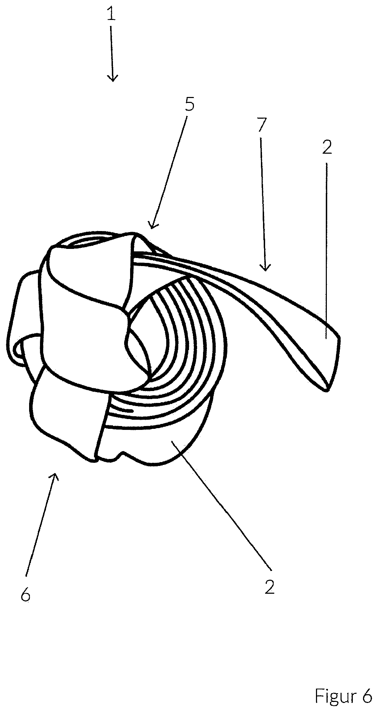

Die Figuren 1 bis 6:
ein Werf- und/oder auf Zug zurückhaltbares Hundespielzeug jeweils beispielhaft zu unterschiedlichen Formen gefügt.
Demgemäß ist in der **Figur 1** das Werf- und/oder auf Zug zurückhaltbare Hundespielzeug 1 in der Form eines Bandes 2 beispielhaft zu einem Knäuel aus mehreren übereinander geknoteten Knoten 5 zusammengefügt.
Die **Figur 2** zeigt das Werf- und/oder auf Zug zurückhaltbare Hundespielzeug 1 in der Form eines bandartigen Materials 2 zu einer Schlaufe 3 mit einem geflochtenen Abschnitt 4 und Knoten 5 geformt.
In der **Figur 3** ist das Werf- und/oder auf Zug zurückhaltbare Hundespielzeug 1 in der Form eines bandartigen Materials 2 an einem Ende 6 zusammengerollt und eingeknotet dargestellt, mit dem restlichen Teil 7 des bandartigen Materials 2 in unmanipuliertem Zustand als Wurfabschnitt dienend.
Die **Figur 4** zeigt das Werf- und/oder auf Zug zurückhaltbare Hundespielzeug 1 in der Form eines bandartigen Materials 2, wiederum beispielhaft, in ausgestreckter Form, mit drei eingekotenten Knoten 5.
In **Figur 5** ist das Werf- und/oder auf Zug zurückhaltbare Hundespielzeug 1 in der Form eines bandartigen Materials 2 in seiner Längserstreckung zweimal zusammengeschlagen, bildet zwei Schlaufen 3 aus und ist in der Mitte zu einem Knoten 5 zusammengeknotet.
Die **Figur 6** zeigt, ähnlich wie die Figur 3, das Werf- und/oder auf Zug zurückhaltbare Hundespielzeug 1 in der Form eines bandartigen Materials 2 an einem Ende 6 zusammengerollt, jedoch mit einem vergleichsweise massiveren Knoten 5 eingeknotet, sowie mit dem restlichen Teil 7 des bandartigen Materials 2 in unmanipuliertem Zustand als Wurfabschnitt dienend.

### Bezugszeichenliste:

- 1: Werf- und/oder auf Zug zurückhaltbare Hundespielzeug
- 2: bandartiges Material
- 3: Schlaufe
- 4: geflochtener Abschnitt
- 5: Knoten
- 6: Ende
- 7: restlicher Teil

## Patentansprüche

1. Werf- und/oder auf Zug zurückhaltbares Hundespielzeug (1) zum Training und/oder zur spielerischen Ertüchtigung und/oder zur Beschäftigung eines Hundes, **dadurch gekennzeichnet, dass** das Hundespielzeug in der Form eines bandartigen Materials (2) ausgebildet ist.

2. Werf- und/oder auf Zug zurückhaltbares Hundespielzeug nach Anspruch 1, **dadurch gekennzeichnet, dass** das bandartige Material (2) ein Textilband ist.

3. Werf- und/oder auf Zug zurückhaltbares Hundespielzeug nach Anspruch 1 oder 2, **dadurch gekennzeichnet, dass** das bandartige Material (2) mehrfach vernäht ist.

4. Werf- und/oder auf Zug zurückhaltbares Hundespielzeug nach einem der vorangehenden Ansprüche, **dadurch gekennzeichnet, dass** das bandartige Material (2) mehrschichtig und mehrfach in der Fläche vernäht ist, so dass sich die einzelnen Schichten nicht gegeneinander abheben können.

5. Werf- und/oder auf Zug zurückhaltbares Hundespielzeug nach einem der vorangehenden Ansprüche, **dadurch gekennzeichnet, dass** das bandartige Material (2) so beschaffen ist, dass entlang seines Längsverlaufs durch gegenseitiges Umschlagen seiner beiden Enden (6) unter Bildung mindestens einer Schlaufe (3) mindestens ein Knoten (5) knotbar ist.

6. Werf- und/oder auf Zug zurückhaltbares Hundespielzeug nach einem der vorangehenden Ansprüche, **dadurch gekennzeichnet, dass** das bandartige Material (2) so ausgebildet ist, dass es mindestens einmal entlang seines Längsverlaufs umschlagbar ist, so dass es einen zweilagigen Abschnitt aufweist, wobei mit dessen beiden Enden -die des zweilagigen Abschnitts- entlang dieses zweilagigen Längsverlaufs durch gegenseitiges Umschlagen unter Bildung mindestens einer Schlaufe (3) mindestens ein Knoten (5) knotbar ist.

7. Werf- und/oder auf Zug zurückhaltbares Hundespielzeug nach einem der vorangehenden Ansprüche, **dadurch gekennzeichnet, dass** das bandartige Material (2) einroll- und zu einem Wurfknoten knotbar ausgebildet ist.

8. Werf- und/oder auf Zug zurückhaltbares Hundespielzeug nach einem der vorangehenden Ansprüche, **dadurch gekennzeichnet, dass** das bandartige Material (2) flechtbar ausgebildet ist.

9. Werf- und/oder auf Zug zurückhaltbares Hundespielzeug nach einem der vorangehenden Ansprüche, **dadurch gekennzeichnet, dass** das bandartige Material (2) entlang seines Längsverlaufs einen Knoten (5) und oder einen geflochtenen Abschnitt (4) aufweist, insbesondere einen Knoten (5) in der Form wie in den Ansprüchen 5 bis 8 beansprucht.
